# EUROPEAN PATENT APPLICATION

(11) **EP 4 424 571 A1**
(43) Date of publication of application: **04.09.2024**
(21) Application number: 24153129.2
(22) Date of filing: 22.01.2024
(51) Int. Cl.: B62D 25/08, B60K 5/12

(54) **VEHICLE REAR STRUCTURE**

(30) Priority: 21.02.2023 JP 2023025106
(71) Applicant: Suzuki Motor Corporation, Shizuoka 432-8611 (JP)
(72) Inventor: NISHIYAMA, Yushiro, HAMAMATSU-SHI, 432-8611 (JP); FUJII, Naoto, HAMAMATSU-SHI, 432-8611 (JP)
(74) Representative: Plasseraud IP

(57) **Abstract**

[Problem to be Solved] To secure supporting rigidity for a drive unit disposed below a floor and secure a larger space.

[Solution] A vehicle rear structure includes: a front mounting bracket 40 attached to a vehicle body while supporting a motor unit, and a reinforcing bracket 50 that is disposed inside the side member 22 and is joined to a side member 22 and a cross member 25. The reinforcing bracket 50 extends in the vertical direction and has the lower end disposed below the cross member 25, the front mounting bracket 40 includes a first joining portion 45c, a second joining portion 46c, and a third joining portion 42 that are joined to a vehicle body, the first joining portion 45c is disposed in the outer part of the front mounting bracket 40 and is joined to the reinforcing bracket 50, and the second joining portion 46c is disposed in the inner portion of the front mounting bracket 40 and is joined to the cross member 25.

## Description

### [Technical Field]

The present invention relates to a vehicle rear structure.

### [Background Art]

Under a floor panel disposed in the rear of a vehicle, a space between left and right rear wheels accommodates various devices and members and thus requires a predetermined capacity. For example, in an electric vehicle, in a case in which a drive unit for driving rear wheels is disposed at the rear of the vehicle, supporting rigidity for the drive unit, which is a heavy object, needs to be secured while maintaining a predetermined space.

For example, in a vehicle disclosed in Patent Literature 1, a differential gear unit, a spare tire and the like are disposed in such a space. The differential gear unit is, for example, a heavy object. Thus, predetermined supporting rigidity needs to be secured to support the differential gear unit in the rear of the vehicle body. For this reason, in a structure disclosed in Patent Literature 1, the differential gear unit is supported by a mounting member attached to a high-rigidity member constituting the frame of the vehicle body.

In the structure disclosed in Patent Literature 1, a spare tire is stored in the rear of the vehicle. In other words, in the structure of this example, a space for storing the spare tire needs to be secured while securing the supporting rigidity of the differential gear unit. For this reason, in the structure disclosed in Patent Literature 1, a differential mounting member is provided at a corner including a side member and a cross member. The mounting member is attached to the differential mounting member. The differential mounting member extends to tilt inward from the side member to the cross member. Thus, the differential gear unit is supported at a position without interfering with the spare tire.

### [Citation List]

### [Patent Literature]

[Patent Literature 1] JP 2006-123708 A

### [Summary of Invention]

### [Problems to be Solved by the Invention]

In a case in which a space for storing disk-shaped articles such as a spare tire is secured as in the structure of the foregoing example, the provision of the tilted differential mounting member can secure the storage space of the spare tire while securing the predetermined supporting rigidity. However, for example, in a case in which a device having a relatively large volume, e.g., a drive unit, is disposed, a part where the differential mounting member is to be disposed may further need to be used as a storage space.

For example, as described above, in a case in which a drive unit for driving rear wheels is disposed in the rear of the vehicle, the supporting rigidity for the drive unit, which is a heavy object, needs to be secured while maintaining a predetermined space. Furthermore, in a case in which a drive unit is disposed, the drive unit needs to be disposed between the left and right rear wheels because an axle shaft extends from the rear wheels to the drive unit. In other words, the drive unit is disposed under multiple constraints and thus may require a larger space.

Furthermore, the drive unit has a larger volume than, for example, a spare tire, so that a larger space needs to be secured to dispose the drive unit. In the structure of the foregoing example, the supporting rigidity for a heavy object is secured by providing the differential mounting member. However, the provision of the member reduces the space of an outer part behind the cross member in the vehicle width direction. Therefore, in order to secure a larger space while securing supporting rigidity for a heavy object disposed below a floor panel in the rear of a vehicle, the structure of the foregoing example has room for improvement.

The present invention has been made to solve the problem. An object of the present invention is to provide a vehicle rear structure that can secure a large space while securing supporting rigidity for a drive unit disposed below a floor panel in the rear of a vehicle.

### [Means for Solving the Problems]

A vehicle rear structure according to the present invention for attaining the object includes: a floor panel disposed in the rear of a vehicle; side members that are disposed on both sides of the floor panel in the vehicle width direction and extend in the longitudinal direction of the vehicle; a cross member that extends in the vehicle width direction so as to connect the side members; a motor unit disposed between the side members on both sides in the vehicle width direction, on the vehicle lower side of the floor panel; and a mounting bracket attached to a vehicle body while supporting the motor unit. In the vehicle rear structure, a reinforcing bracket that is disposed inside the side member in the vehicle width direction and is joined to each of the side members and the cross member. The reinforcing bracket extends in the vertical direction of the vehicle and has the lower end disposed lower than the cross member in the vehicle, the mounting bracket includes a first joining portion, a second joining portion, and a third joining portion that are joined to the vehicle body, the first joining portion is disposed in the outer part of the mounting bracket in the vehicle width direction and is joined to the reinforcing bracket, and the second joining portion is disposed in the inner portion of the mounting bracket in the vehicle width direction and is joined to the cross member.

### [Advantageous Effects of Invention]

According to the present invention, a large space can be secured while securing supporting rigidity for a drive unit disposed below a floor panel in the rear of a vehicle.

### [Brief Description of Drawings]

[Figure 1] Figure 1 is a bottom view illustrating a vehicle rear structure according to the present invention when viewed from the bottom of a vehicle, and schematically illustrates a motor unit.
[Figure 2] Figure 2 is a bottom view illustrating a state in which the motor unit and rear wheels or the like in Figure 1 are removed.
[Figure 3] Figure 3 is a schematic side view of Figure 2.
[Figure 4] Figure 4 is an enlarged bottom view illustrating a front mounting bracket on the left side of Figure 2 and the vicinity of the front mounting bracket.
[Figure 5] Figure 5 is a perspective view illustrating the front mounting bracket in Figure 4 when viewed from the front of the vehicle.
[Figure 6] Figure 6 is a perspective view in which the front mounting bracket in Figure 5 is indicated by a virtual line and a floor panel and a second side member are omitted.
[Figure 7] Figure 7 is a bottom view illustrating a first joining portion and the like in Figure 6 when viewed from the bottom of the vehicle.
[Figure 8] Figure 8 is a cross-sectional view taken along line A-A of Figure 5.
[Figure 9] Figure 9 is a perspective view illustrating the front mounting bracket in Figure 5.
[Figure 10] Figure 10 is a front view illustrating the front mounting bracket in Figure 9.
[Figure 11] Figure 11 is a perspective view illustrating a front mounting bracket on the right side in Figure 2 when viewed from the front of the vehicle.

### [Mode for Carrying Out the Invention]

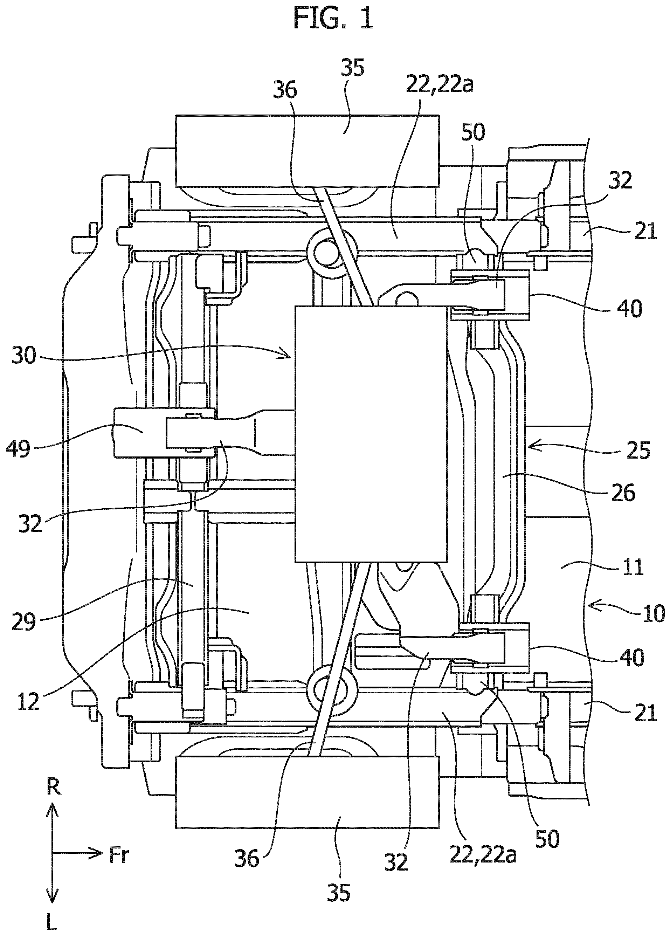

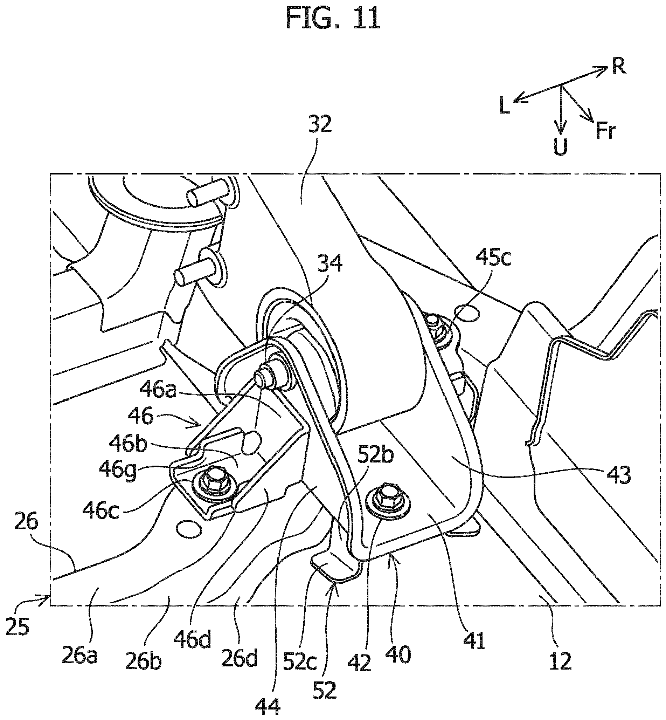

An embodiment of a vehicle rear structure according to the present invention will be described below with reference to the accompanying drawings (Figures 1 to 11). In the drawings, an arrow Fr direction indicates the front side in the longitudinal direction of a vehicle. "Front (front end) and rear (rear end)" in the description of the embodiment corresponds to the front and the rear in the longitudinal direction of the vehicle. Furthermore, an arrow R and an arrow L indicate the right side and the left side in a passenger view ahead of the vehicle. An arrow U indicates the upper side of the vehicle.

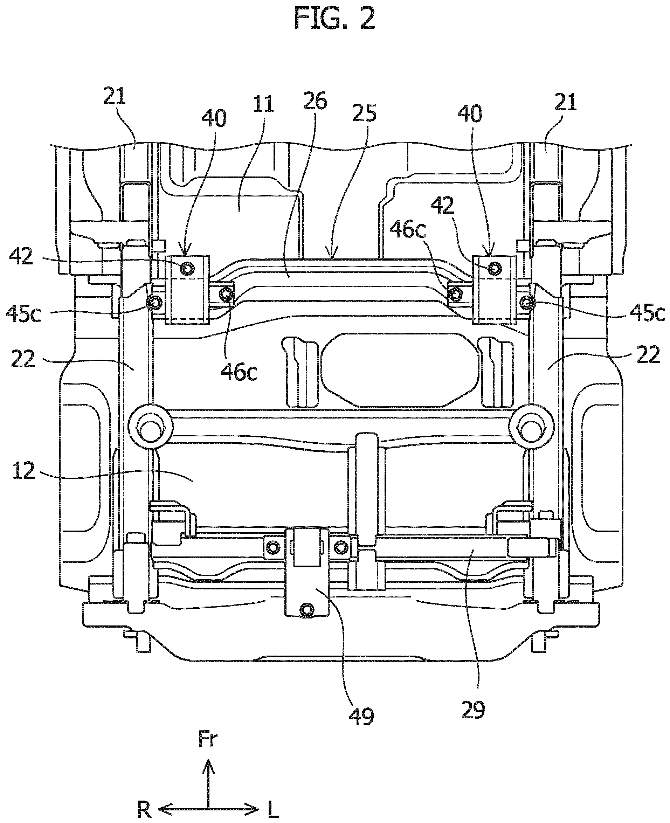

As illustrated in Figures 1 and 2, a vehicle rear structure of the present embodiment is a structure provided below a floor panel 10 and in a space between rear wheels 35 in the vehicle width direction. Furthermore, the vehicle rear structure of the present embodiment is a structure of a motor vehicle. The vehicle enables rear wheel drive in which the rear wheels 35 are driven via an axle shaft 36 by a motor unit 30 (drive unit) disposed in the rear of the vehicle. In the present embodiment, the vehicle is preferable as long as the motor unit 30 is disposed in the rear of the vehicle. Thus, the vehicle may include, for example, the motor unit 30 for driving the rear wheels 35 and another motor unit for driving the front wheels.

The vehicle rear structure of the present embodiment includes the floor panel 10, side members 21 and 22, a first cross member 25 (cross member), a second cross member 29, the motor unit 30, left and right front mounting brackets 40 (mounting bracket), a rear mounting bracket 49, left and right reinforcing brackets 50, left and right balancer members 52, and left and right gadgets 53. The members will be described below.

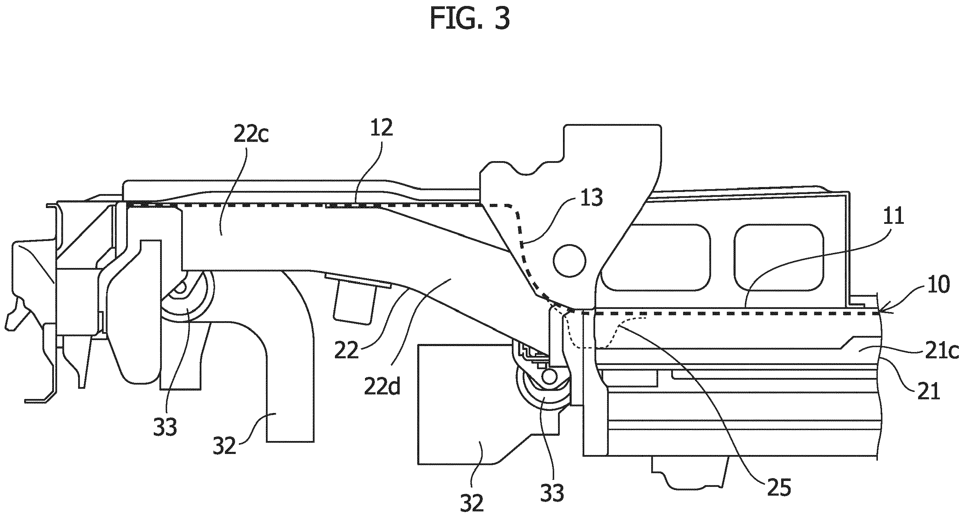

As illustrated in Figure 3, the floor panel 10 of the present embodiment is a member constituting the floor part of the vehicle body and is configured with vertically different vehicle directions on the front side and the rear side with respect to an intermediate part in the longitudinal direction of the vehicle. The floor panel 10 of this example includes a lower part 11, an upper part 12, and a vertical wall part 13. The lower part 11 may be a part located, for example, near the front side of the vehicle and in front of a rear seat (not illustrated) disposed in the vehicle, whereas the upper part 12 may be a part where the rear seat and a trunk are disposed. The vertical wall part 13 is configured such that the rear end of the lower part 11 is bent to the upper side of the vehicle and is connected to the front end of the upper part 12. The vertical wall part 13 of this example is indicated by a broken line and is not specifically illustrated in Figure 3. The vertical wall part 13 forms a so-called backward tilting wall that slightly tilts toward the rear of the vehicle as the tilt extends to the upper side of the vehicle. The vehicle rear structure of the present embodiment is a structure located behind the rear of the lower part 11 and near the rear side of the vehicle.

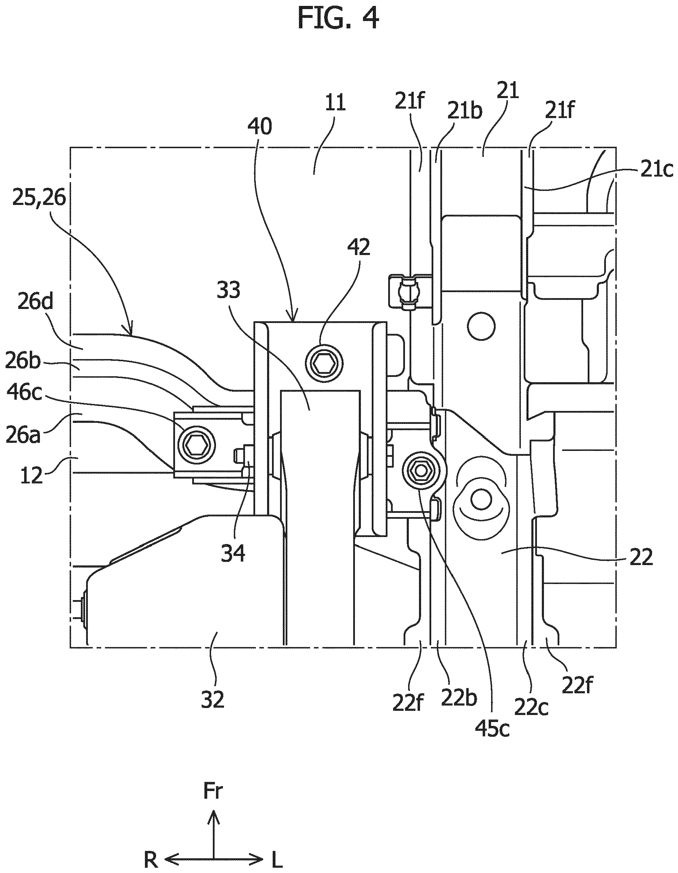

As illustrated in Figure 4, the side members 21 and 22 are disposed on both sides of the floor panel 10 in the vehicle width direction and extend in the longitudinal direction of the vehicle. The side members 21 and 22 are high-rigidity members constituting the frame of the vehicle body and are made of a metallic material. The side members 21 and 22 are joined to an outer part on the undersurface of the floor panel 10 in the vehicle width direction. For example, the side members 21 and 22 have undersurfaces 21a and 22a that face the rear of the vehicle and extend in the longitudinal direction of the vehicle, inner surfaces 21b and 22b and outer surfaces 21c and 22c that extend toward the top of the vehicle from both ends of the undersurfaces 21a and 22a in the vehicle width direction. The upper ends of the inner surfaces 21b and 22b and the outer surfaces 21c and 22c are provided with flanges 21f and 22f. The flanges 21f and 22f are preferably joined to the undersurface of the floor panel 10 by spotwelding or the like. The side members 21 and 22 of the present embodiment include a first side member 21 joined to one side of the lower part 11 of the floor panel 10 and a second side member 22 joined to the upper part 12 of the floor panel 10. The rear of the first side member 21 and the front of the second side member 22 are joined to each other. Furthermore, the second side member 22 includes a tilting portion 22d. The details of the tilting portion 22d will be discussed later.

The first cross member 25 is a member that extends in the vehicle width direction so as to connect the side members 21 and 22 on both sides and is joined to the undersurface of the floor panel 10. In the present embodiment, as illustrated in Figure 3, the first cross member 25 is located at a position corresponding to the vertical wall part 13 of the floor panel 10 and extends, as illustrated in Figure 2, in the vehicle width direction so as to connect the left and right second side members 22. Like the first side member 21 and the second side member 22, the first cross member 25 is a high-rigidity member that constitutes the frame of the vehicle body and is made of a metallic material. The first cross member 25 of the present embodiment includes a central member 26 extending along the vehicle width direction and two extended members 27 provided to extend from the respective sides of the central member 26 in the vehicle width direction toward the outside in the vehicle width direction.

As illustrated in Figures 4 to 7 and 11, the central member 26 has an undersurface 26a that faces the lower side of the vehicle and extends in the vehicle width direction and a front surface 26b and a rear surface 26c that extend toward the upper side of the vehicle respectively from the front end and the rear end of the undersurface 26a. The upper end of the front surface 26b of the central member 26 is provided with a front flange 26d that protrudes toward the front of the vehicle. The front flange 26d is joined to the undersurface of the lower part 11 of the floor panel 10 by spotwelding. The upper end of the rear surface 26c of the central member 26 is provided with a rear flange (not illustrated) that protrudes along the vertical wall part 13 of the floor panel 10. The rear flange is joined to the rear surface of the vertical wall part 13 by, for example, spotwelding. The rear flange tilts along the tilt direction of the vertical wall part 13 of the floor panel 10.

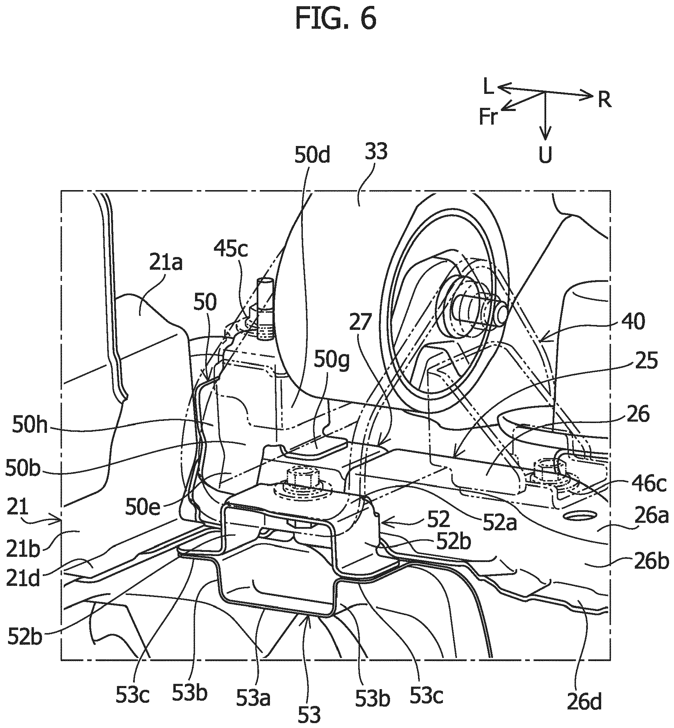

As illustrated in Figure 6, the extended member 27 is extended to connect the outer part of the central member 26 in the vehicle width direction and the inner surface of the side member (in this example, the inner surface 22b of the second side member 22). The extended member 27 has an undersurface, a front surface, and a rear surface like the central member 26. The upper end of the front surface is provided with a front flange, and the upper end of the rear surface is provided with a rear flange. The inner part of the extended member 27 in the vehicle width direction is joined by spotwelding while being overlapped on the outer part of the central member 26 in the vehicle width direction. For example, the undersurface 26a of the central member 26 and the undersurface of the extended member 27 are joined to each other by spotwelding. Likewise, the front surface 26b of the central member 26 and the front surface of the extended member 27 are also joined to each other by spotwelding. For example, the rear surface is also preferably joined by spotwelding.

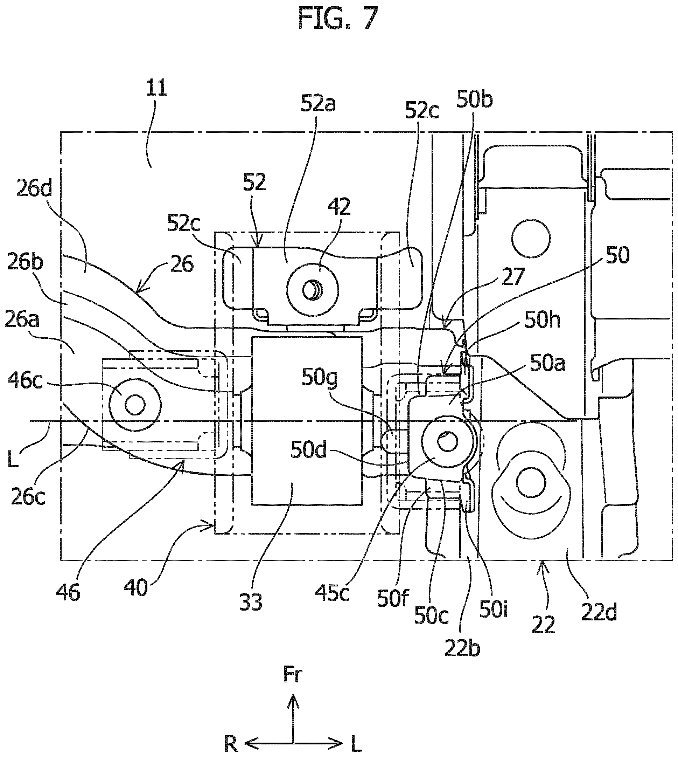

Furthermore, as illustrated in Figures 6 and 7, the outer part of the extended member 27 in the vehicle width direction is joined to the inner surface 22b of the second side member 22 by spotwelding. The outer ends of the front surface and the rear surface of the extended member 27 in the vehicle width direction are provided with flanges, which are not illustrated. The flanges are preferably joined to the inner surface 22b of the second side member 22 by spotwelding.

As illustrated in Figures 1 and 2, the second cross member 29 is disposed on the vehicle rear side of the first cross member 25. Like the first cross member 25, the second cross member 29 is a member constituting the frame of the vehicle body. Furthermore, the second cross member 29 is disposed on the rear end of the upper end part of the floor panel 10.

As illustrated in Figure 1, the motor unit 30 of the present embodiment is supported by three mounting brackets attached to the vehicle body. In this example, the motor unit 30 of this example is supported by the left and right front mounting brackets 40 and the rear mounting bracket 49. The rear mounting bracket 49 is attached to the second cross member 29 and supports the rear of the motor unit 30. In this example, the motor unit 30 is disposed between the left and right front mounting brackets 40 in the vehicle width direction, and the rear mounting bracket 49 and the left and right front mounting brackets 40 form a triangle.

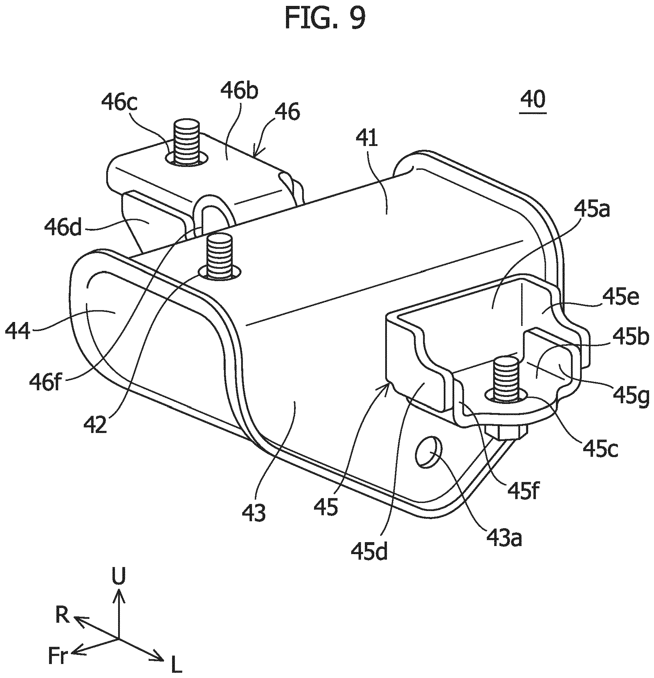

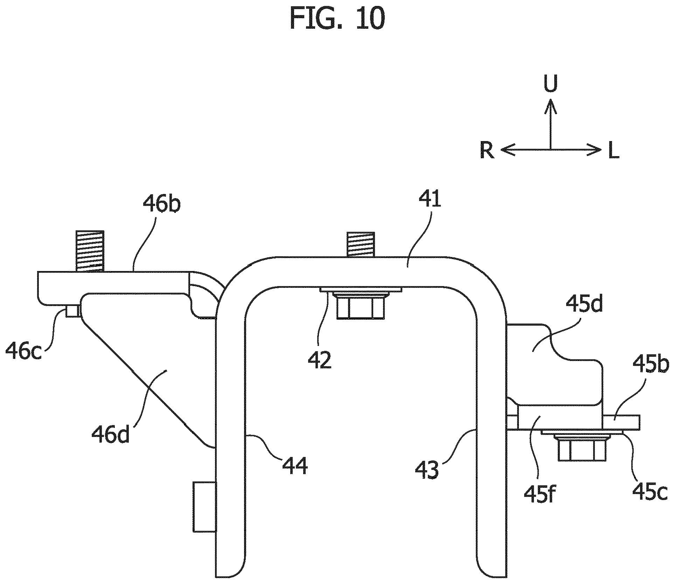

The details of the front mounting brackets 40 will be described below. In the lower part of the vehicle body, the front mounting brackets 40 are disposed on both sides (left and right) in the vehicle width direction. As illustrated in Figures 9 and 10, the front mounting bracket 40 of the present embodiment includes a top surface part 41, an outer wall part 43, an inner wall part 44, an outer protruding part 45, and an inner protruding part 46.

The top surface part 41 is a substantially shaped like a rectangle extending in the longitudinal direction of the vehicle and has a top surface and an undersurface that face the upper side and the lower side of the vehicle. The top surface part 41 is provided with a central joining portion 42 (third joining part) that is joined to the vehicle body. The central joining portion 42 has a circular through hole that penetrates in the vertical direction of the vehicle so as to allow the insertion of a fastening member, e.g., a bolt. The joining of the central joining portion 42 and the vehicle body will be described later.

The outer wall part 43 is a wall part that extends toward the lower side of the vehicle from the outer end of the top surface part 41 in the vehicle width direction and decreases in length toward the lower side of the vehicle in the longitudinal direction of the vehicle. The lower part of the outer wall part 43 has a circular through hole 43a penetrating in the vehicle width direction. The through hole 43a is formed to allow the insertion of the shaft portion of a mounting member 33, which will be described later.

The inner wall part 44 is a wall part that extends toward the lower side of the vehicle from the inner end of the top surface part 41 in the vehicle width direction and decreases in length toward the lower side of the vehicle in the longitudinal direction of the vehicle like the outer wall part 43. The lower part of the inner wall part 44 has a circular through hole penetrating in the vehicle width direction like the outer wall part 43. The through hole is formed to allow the insertion of the shaft portion of the mounting member 33. The through hole 43a of the outer wall part 43 and the through hole of the inner wall part 44 are coaxially formed in the vehicle width direction. In the present embodiment, the top surface part 41, the outer wall part 43, and the inner wall part 44 are integrally formed in a U-shape when viewed in the longitudinal direction of the vehicle with the front mounting brackets 40 attached to the vehicle body.

As illustrated in Figures 9 and 10, the outer protruding part 45 is a part protruding from an intermediate portion of the outer wall part 43 in the vertical direction of the vehicle to the outside in the vehicle width direction. The outer protruding part 45 of the present embodiment is configured as a different member from the top surface part 41 or the like. The outer protruding part 45 has a joining surface portion 45a, a flat surface portion 45b, a front wall 45d, and a rear wall 45e. The joining surface portion 45a is a substantially rectangular plate that is joined to the outer wall part 43 by, for example, arc welding. The flat surface portion 45b is a flat portion that protrudes from the lower end of the joining surface portion 45a to the outside in the vehicle width direction. Furthermore, the flat surface portion 45b is disposed in an intermediate portion (almost at the center) of the outer wall part 43 in the vertical direction of the vehicle. Furthermore, the flat surface portion 45b is provided with an outer joining portion 45c (first joining portion) that is joined to the vehicle body. The outer joining portion 45c has a circular through hole that penetrates in the vertical direction of the vehicle so as to allow the insertion of a fastening member, e.g., a bolt. The outer joining portion 45c is disposed lower than the central joining portion 42 in the vehicle. The joining of the outer joining portion 45c and the vehicle body will be described later.

The front wall 45d of the outer protruding part 45 is a portion connected to a flange 45f, which is provided at the front of the top surface of the flat surface portion 45b, and the front of the joining surface portion 45a. The front wall 45d has a substantially rectangular corner that is notched when viewed in the longitudinal direction of the vehicle. The rear wall 45e of the outer protruding part 45 is a portion connected to a flange 45g, which is provided at the rear of the top surface of the flat surface portion 45b, and the rear of the joining surface portion 45a. The rear wall 45e has the same shape as the front wall 45d. The front wall 45d and the rear wall 45e are connected to the front and rear of the joining surface portion 45a and are joined to the flanges 45f and 45g at the front and rear of the flat surface portion 45b by arc welding or the like.

As illustrated in Figures 9 and 10, the inner protruding part 46 is a part protruding inward from the upper portion of the inner wall part 44 in the vehicle width direction. The inner protruding part 46 of the present embodiment is configured as a different member from the top surface part 41 or the like. Like the outer protruding part 45, the inner protruding part 46 has a joining surface portion 46a, a flat surface portion 46b, a front wall 46d, and a rear wall 46e. The joining surface portion 46a of the inner protruding part 46 is a substantially rectangular plate that is joined to the inner wall part 44 by arc welding. The flat surface portion 46b is a flat portion that protrudes inward from the upper end of the joining surface portion 46a in the vehicle width direction. Furthermore, the flat surface portion 46b is disposed along the top surface part 41 in the vehicle width direction. Furthermore, the flat surface portion 46b is provided with an inner joining portion 46c (second joining portion) that is joined to the vehicle body. The inner joining portion 46c has a circular through hole that penetrates in the vertical direction of the vehicle so as to allow the insertion of a fastening member, e.g., a bolt. The position of the inner joining portion 46c in the vertical direction of the vehicle is set at substantially the same position as the central joining portion 42 in the vertical direction of the vehicle. The joining of the inner joining portion 46c and the vehicle body will be described later.

The front wall 46d of the inner protruding part 46 is a portion connected to a flange 46f, which is provided at the front of the undersurface of the flat surface portion 46b, and the front of the joining surface portion 46a. The front wall 46d is substantially shaped like a right triangle when viewed in the longitudinal direction of the vehicle. The rear wall 46e of the inner protruding part 46 is a portion connected to a flange 46g, which is provided at the rear of the undersurface of the flat surface portion 46b, and the rear of the joining surface portion 46a. The rear wall 46e has the same shape as the front wall 46d. The front wall 46d and the rear wall 46e are connected to the front and rear of the joining surface portion 46a and are joined to the flanges 46f and 46g at the front and rear of the flat surface portion 46b by arc welding.

In the U-shape formed by the top surface part 41, the outer wall part 43, and the inner wall part 44, the cylindrical mounting member 33 extending in the vehicle width direction is disposed. As illustrated in Figures 4 to 6, the mounting member 33 has a shaft portion passing through a cylinder central axis, on both ends in the axial direction along which the cylinder central axis extends. The shaft portion is attached through the through holes of the outer wall part 43 and the inner wall part 44. The mounting member 33 is provided on one end of a support arm 32 for supporting the motor unit 30. In the mounting member 33, for example, a cylindrical elastic member made of a resin material or the like is provided to reduce the transmission of vibrations of the motor unit 30 to the vehicle body.

The reinforcing bracket 50 will be described below. The reinforcing bracket 50 is disposed inside the side member (in this example, the second side member 22) in the vehicle width direction, is joined to each of the second side member 22 and the first cross member 25, and extends in the vertical direction of the vehicle. The lower end of the reinforcing bracket 50 is disposed below the cross member (in this example, the first cross member 25) in the vehicle.

As illustrated in Figure 7, the reinforcing bracket 50 of the present embodiment is a hollow member that extends toward the top of the vehicle and is joined to the extended member 27 of the first cross member 25 and the inner surface 22b of the second side member 22. Furthermore, the outer joining portion 45c of the front mounting bracket 40 is joined to the lower part of the reinforcing bracket 50. The reinforcing bracket 50 will be specifically described below.

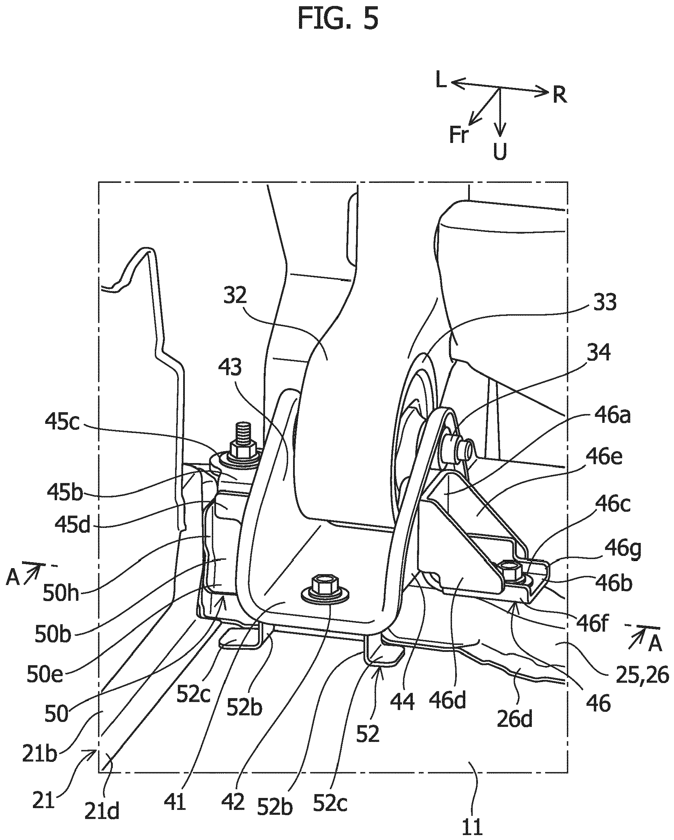

As illustrated in Figures 5 to 7, the reinforcing bracket 50 is a high-rigidity member made of a metallic material and has an undersurface part 50a, a front wall part 50b, a rear wall part 50c, and an inner wall part 50d that are substantially shaped like quadrangles. Furthermore, the reinforcing bracket 50 includes a front flange 50e, a rear flange 50f, and an inside lateral flange 50g that are joined to the first cross member 25 and an outer-front vertical flange 50h and an outer-rear vertical flange 50i that are joined to the inner surface 22b of the second side member 22.

The undersurface part 50a has a flat surface facing the lower side of the vehicle. The undersurface part 50a has a circular through hole penetrating in the vertical direction of the vehicle. The front wall part 50b extends toward the top of the vehicle from the front end of the undersurface part 50a and reaches the undersurface of the extended member 27 of the first cross member 25. The rear wall part 50c extends toward the top of the vehicle from the rear end of the undersurface part 50a and reaches the undersurface of the extended member 27 of the first cross member 25. Likewise, the inner wall part 50d extends toward the top of the vehicle from the inner end of the undersurface part 50a in the vehicle width direction and reaches the undersurface of the extended member 27 of the first cross member 25. The front wall part 50b and the inner wall part 50d are connected to each other via an edge line. This also holds true for the rear wall part 50c and the inner wall part 50d.

The front flange 50e extends toward the top of the vehicle from the upper end of the front wall part 50b and is joined to the front surface of the extended member 27 by spotwelding. The rear flange 50f extends toward the top of the vehicle from the upper end of the rear wall part 50c and is joined to the rear surface of the extended member 27 by spotwelding. The inside lateral flange 50g protrudes inward from the upper end of the inner wall part 50d in the vehicle width direction and is joined to the rear surface of the extended member 27 by spotwelding.

The outer-front vertical flange 50h protrudes toward the front of the vehicle from the outer ends of the front wall part 50b and the front flange 50e in the vehicle width direction. In other words, the outer-front vertical flange 50h is a flange extending in the vertical direction of the vehicle. In this example, the outer-front vertical flange 50h is joined to the inner surface 22b of the second side member 22 by spotwelding. Likewise, the outer-rear vertical flange 50i protrudes toward the rear of the vehicle from the outer ends of the rear wall part 50c and the rear flange 50f in the vehicle width direction and extends in the vertical direction of the vehicle. The outer-rear vertical flange 50i is joined to the inner surface 22b of the second side member 22 by spotwelding.

As illustrated in Figures 4 to 6, the outer joining portion 45c of the front mounting bracket 40 is joined to the undersurface part 50a. In this example, the undersurface part 50a has, for example, a circular through hole. The through hole of the undersurface part 50a is disposed to communicate with the through hole of the outer joining portion 45c. The undersurface part 50a and the outer joining portion 45c are fastened with bolts in the through holes. The position of the undersurface part 50a in the vertical direction of the vehicle is set close to the undersurface of the second side member 22 adjacent to the undersurface part 50a in the vehicle width direction.

The joining of the inner joining portion 46c of the front mounting bracket 40 and the first cross member 25 will be described below. The inner joining portion 46c is joined to the undersurface of the central member 26 of the first cross member 25. A through hole is formed on the undersurface 26a of the central member 26. The through hole of the central member 26 and the through hole of the inner joining portion 46c are disposed to communicate with each other, and a bolt is inserted to fasten the inner joining portion 46c to the undersurface 26a of the central member 26 with the bolt.

By providing the reinforcing brackets 50 joined to the side member and the cross member by spotwelding that constitute the frame of the vehicle body, rigidity and strength can be improved in parts where the front mounting brackets 40 are fixed. Furthermore, according to the present embodiment, in a configuration where the position of the undersurface 26a of the first cross member 25 in the vertical direction of the vehicle and the position of the undersurface of the second side member 22 in the vertical direction are different from each other in a position where the first cross member 25 is joined to the second side member 22, the step of fastening the front mounting bracket 40 with the bolt may be performed with difficulty or inefficiency during production. To address the problem, according to the present embodiment, the reinforcing brackets 50 are configured to extend toward the lower side of the vehicle from the first cross member 25, and the undersurface parts 50a of the reinforcing bracket 50 are brought close to the undersurfaces of the second side members 22 adjacent to the reinforcing brackets 50 in the vehicle width direction, achieving efficient fastening with the bolt.

By fastening the front mounting brackets 40 around positions where the first cross member 25 is joined to the second side members 22, the rigidity and strength can be improved to reduce a deformation of the frame of the vehicle body. Furthermore, the reinforcing brackets 50 is a member extending downward and is configured to extend toward the lower side of the vehicle from the undersurface 26a of the first cross member 25, thereby securing a large space on the vehicle rear side of the first cross member 25.

The balancer members 52 will be described below. As illustrated in Figures 5 to 8, the balancer members 52 are disposed on both sides (the left and right) in the vehicle width direction in the lower part of the vehicle body. In this example, the balancer members 52 are disposed on both sides in the vehicle width direction on the undersurface of the lower part 11 of the floor panel 10. The balancer members 52 are disposed on the undersurface of the floor panel 10 (the undersurface of the lower part 11) located on the vehicle front side of the first cross member 25 and are shaped like hats protruding toward the lower side of the vehicle in cross section. In the present embodiment, an undersurface part 52a of the balancer member 52 is substantially shaped like a rectangular plate extending in the vehicle width direction and has a through hole. On both sides of the undersurface part 52a in the vehicle width direction, side wall parts 52b are provided. A flange 52c is provided on the upper end of each of the side wall parts 52b. The flange 52c is joined to the undersurface of the lower part 11 of the floor panel 10 by spotwelding.

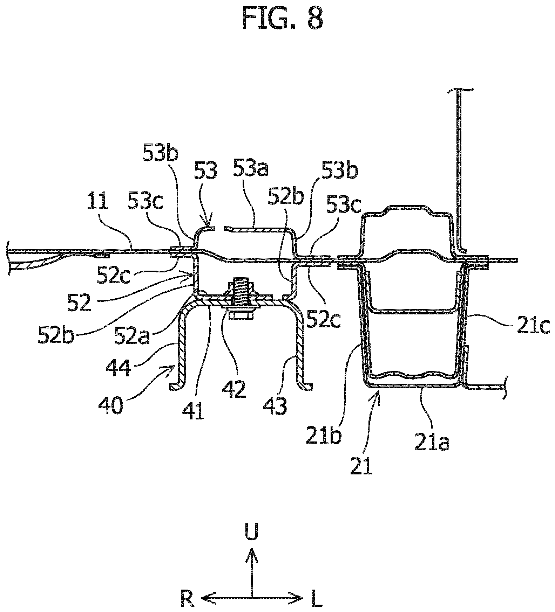

The gadgets 53 will be described below. As illustrated in Figures 6 and 8, the gadgets 53 are disposed on the top surface of the floor panel 10 located on the vehicle front side of the cross member (in this example, the first cross member 25) and are laterally disposed for the left and right balancer members 52, respectively. The gadget 53 is shaped like a hat protruding toward the upper side of the vehicle in cross section. The gadget 53 extends in the longitudinal direction of the vehicle. The rear end of the gadget 53 is located on the vehicle rear side with respect to the front end of the first cross member 25. In this example, the gadget 53 extends toward the rear of the vehicle from a position corresponding to the balancer member 52, bends upward from the lower part 11 of the floor panel 10 along the vertical wall part 13, and extends to an intermediate part of the vertical wall part 13 in the vertical direction of the vehicle (Figure 6).

In the present embodiment, as illustrated in Figures 6 and 8, the length of a top surface part 53a of the gadget 53 in the vehicle width direction substantially corresponds to the length of the undersurface part 52a of the balancer member 52 in the vehicle width direction. On both sides of the top surface part 53a of the gadget 53 in the vehicle width direction, side wall parts 53b are provided. A flange 53c is provided on the lower end of each of the side wall parts 53b. The flange 53c is joined to the undersurface of the lower part 11 of the floor panel 10 by spotwelding.

The position of the gadget 53 in the vehicle width direction preferably corresponds to a position where the central member 26 and the extended member 27 are joined to each other. In this case, the rear end of the gadget 53 is preferably disposed so as to correspond to the lower end of the rear flange of the central member 26 and the lower end of the rear flange of the extended member 27. In this way, the gadget 53 corresponds to a position where the central member 26 and the extended member 27 overlap one over the other, so that the overlap of the multiple members improves the rigidity and strength. Furthermore, spotwelding can be performed on the three overlapping members, thereby improving the rigidity.

In the present embodiment, the flange 52c of the balancer members 52 and the flange 53c of the gadget 53 are joined to the floor panel 10 while the lower part 11 of the floor panel 10 is held between the flanges. Furthermore, the central joining portion 42 (third joining portion) of the front mounting bracket 40 is joined to the undersurface part 52a of the balancer member 52. The through hole of an undersurface part 52a is disposed to communicate with the through hole of the central joining portion 42 of the front mounting bracket 40. The undersurface part 52a and the central joining portion 42 are fastened with bolts in the through holes.

The central joining portion 42 (third joining portion) is disposed on the vehicle front side of the outer joining portion 45c (first joining portion) and the inner joining portion 46c (second joining portion). This can reduce a movement of the motor unit 30 in the longitudinal direction of the vehicle, thereby reducing vibrations transmitted to the vehicle body from the motor unit 30. Furthermore, the rear of the gadget 53 is bent upward with respect to the front so as to reinforce the lower part 11 and the vertical wall part 13 of the floor panel 10. Thus, rigidity and strength can be improved in and around a part where the front mounting bracket 40 is attached. This can reduce a deformation recessed on the floor panel 10 to the vehicle interior because of a load from the front mounting bracket 40. Furthermore, the gadget 53 extends to the rear end of the first cross member 25 and thus stretches over the tilt of the first cross member 25, thereby improving the rigidity of the floor panel 10.

Furthermore, in the present embodiment, as illustrated in Figure 7, the outer joining portion 45c (first joining portion), the inner joining portion 46c (second joining portion), and the central joining portion 42 (third joining portion) are displaced from one another in the longitudinal direction of the vehicle. Specifically, the central joining portion 42 is disposed in the foremost position, the inner joining portion 46c is disposed, and then the outer joining portion 45c is finally disposed.

The front mounting bracket 40 fastens both ends of the mounting member 33 in the vehicle width direction with a bolt extending in the vehicle width direction, the mounting member 33 extending in the vehicle width direction. In other words, the U-shaped part of the front mounting bracket 40 holds the cylindrical mounting member 33. Furthermore, as illustrated in Figure 7, a vehicle-width-direction virtual line L including the central axis of a bolt 34 for fastening the mounting member 33 is disposed between the outer joining portion 45c and the inner joining portion 46c in the longitudinal direction of the vehicle. Specifically, the hole center of the through holes of the outer joining portion 45c and the inner joining portion 46c are longitudinally displaced from each other with respect to the vehicle-width-direction virtual line L.

The outer joining portion 45c, the inner joining portion 46c, and the central joining portion 42 are displaced from one another, thereby providing a strong structure resistant to longitudinal and lateral swings of the motor unit 30. The motor unit 30 has complicated motions of yaws, pitches, and rolls. Thus, a force that makes a rotation in a complicated direction (vector) may be applied to the bolt extending in the vehicle width direction. The outer joining portion 45c and the inner joining portion 46c are longitudinally disposed with respect to the virtual line L including the center of the bolt, thereby providing a strong structure resistant to a rotating operation in the complicated direction.

Furthermore, as illustrated in Figure 3, the side member of the present embodiment includes the tilting portion 22d on the vehicle rear side of the joining portion with the cross member, the tilting portion 22d tilting upward toward the rear of the vehicle. In this example, the undersurface of the tilting portion 22d of the second side member 22 tilts upward toward the rear of the vehicle. Furthermore, the outer joining portion 45c (first joining portion) and the inner joining portion 46c (second joining portion) are disposed near the undersurface of the first cross member 25. In other words, the outer joining portion 45c and the inner joining portion 46c are disposed to be overlapped on the first cross member 25 in the bottom view of the vehicle. Furthermore, in the present embodiment, the outer joining portion 45c (first joining portion) is disposed in the lower part of the vehicle with respect to the inner joining portion 46c (second joining portion) and the central joining portion 42 (third joining portion).

The outer joining portion 45c is disposed lower than the other joining portions 46c and 42, and thus, the sides of the motor unit 30 are surrounded at three points (surrounded from above), thereby providing a strong structure that reduces swings of the motor unit 30 over the vehicle body. Furthermore, the outer joining portion 45c is disposed lower than the first cross member 25, thereby facilitating a bolt fastening operation when the front mounting brackets 40 are assembled into the vehicle body.

The description of the present embodiment is merely an exemplification for describing the present invention and does not limit the invention set forth in the claims. Furthermore, the configurations of the present invention are not limited to the foregoing embodiment and can be modified in various ways within the technical scope of the claims.

For example, in the present embodiment, the first cross member 25 includes the central member 26 and the extended member 27. The configuration is not limited thereto. For example, the first cross member 25 may be configured with a single member. Alternatively, a structure may be provided without the central joining portion 42, depending upon the weight of the motor unit 30.

### [Reference Signs List]

- 10: Floor panel
- 11: Lower part
- 12: Upper part
- 13: Vertical wall part
- 21: First side member
- 21a: Undersurface
- 21b: Inner surface
- 21c: Outer surface
- 21f: Flange
- 22: Second side member
- 22a: Undersurface
- 22b: Inner surface
- 22c: Outer surface
- 22d: Tilting portion
- 22f: Flange
- 25: First cross member (cross member)
- 26: Central member
- 26a: Undersurface
- 26b: Front surface
- 26c: Rear surface
- 26d: Front flange
- 26e: Rear flange
- 27: Extended member
- 29: Second cross member
- 30: Motor unit
- 32: Support arm
- 33: Mounting bush
- 34: Bolt
- 35: Rear wheel
- 36: Axle shaft
- 40: front mounting bracket (mounting bracket)
- 41: Top surface part
- 42: Central joining portion (third joining portion)
- 43: Outer wall part
- 44: Inner wall part
- 45: Outer protruding part
- 45a: Joining surface portion
- 45b: Flat surface portion
- 45c: Outer joining portion (first joining portion)
- 45d: Front wall
- 45e: Rear wall
- 45f: Flange
- 45g: Flange
- 46: Inner protruding part
- 46a: Joining surface portion
- 46b: Flat surface portion
- 46c: Inner joining portion (second joining portion)
- 46d: Front wall
- 46e: Rear wall
- 46f: Flange
- 46g: Flange
- 49: Rear mounting bracket
- 50: Reinforcing bracket
- 50a: Undersurface part
- 50b: Front wall part
- 50c: Rear wall part
- 50d: Inner wall part
- 50e: Front flange
- 50f: Rear flange
- 50g: Inside lateral flange
- 50h: Outer-front vertical flange
- 50i: Outer-rear vertical flange
- 52: Balancer member
- 50a: Undersurface part
- 52b: Side wall part
- 52c: Flange
- 53: Gadget
- 53a: Top surface part
- 53b: Side wall part
- 53c: Flange
- L: Virtual line

## Claims

1. A vehicle rear structure including:
a floor panel disposed in a rear of a vehicle;
side members that are disposed on both sides of the floor panel in a vehicle width direction and extend in a longitudinal direction of the vehicle;
a cross member that extends in the vehicle width direction so as to connect the side members;
a motor unit disposed between the side members on both sides in the vehicle width direction, on a vehicle lower side of the floor panel; and
a mounting bracket attached to a vehicle body while supporting the motor unit, **characterized in that**
the vehicle rear structure includes a reinforcing bracket that is disposed inside the side member in the vehicle width direction and is joined to each of the side members and the cross member, the reinforcing bracket extending in a vertical direction of the vehicle and having a lower end disposed lower than the cross member in the vehicle,
the mounting bracket has a first joining portion, a second joining portion, and a third joining portion that are joined to the vehicle body,
the first joining portion is disposed in an outer part of the mounting bracket in the vehicle width direction and is joined to the reinforcing bracket, and
the second joining portion is disposed in an inner part of the mounting bracket in the vehicle width direction and is joined to the cross member.

2. The vehicle rear structure according to claim 1, wherein
a balancer member is disposed on an undersurface of the floor panel located on a vehicle front side of the cross member, the balancer member being shaped like a hat protruding toward a lower side of the vehicle in cross section,
a gadget is disposed on a top surface of the floor panel located on the vehicle front side of the cross member, the gadget being shaped like a hat protruding toward an upper side of the vehicle in cross section,
the gadget extends in the longitudinal direction of the vehicle and has a rear end located on a vehicle rear side with respect to a front end of the cross member,
the balancer member and the gadget are joined to the floor panel while the floor panel is held between the balancer member and the gadget, and
the third joining portion is disposed in a front of the mounting bracket and is joined to the balancer member.

3. The vehicle rear structure according to claim 1 or 2, wherein
the first joining portion, the second joining portion, and the third joining portion are displaced from one another in the longitudinal direction of the vehicle,
the mounting bracket fastens both ends of a mounting bush in the vehicle width direction with a bolt extending in the vehicle width direction, the mounting bush extending in the vehicle width direction, and
a virtual line including a central axis of the bolt is disposed between the first joining portion and the second joining portion in the longitudinal direction of the vehicle, the virtual line extending in the vehicle width direction.

4. The vehicle rear structure according to claim 1 or 2, wherein
the side member includes a tilting portion on a vehicle rear side of a joining portion with the cross member, the tilting portion tilting upward toward a rear of the vehicle,
the first joining portion and the second joining portion are disposed near an undersurface of the cross member, and
the first joining portion is disposed in a lower part of the vehicle with respect to the second joining portion and the third joining portion.
